# EUROPEAN PATENT APPLICATION

(11) **EP 4 567 631 A1**
(43) Date of publication of application: **11.06.2025**
(21) Application number: 23849314.2
(22) Date of filing: 31.07.2023
(51) Int. Cl.: G06F 16/9535, G06F 16/9035, G06F 16/9038

(54) **INFORMATION RECOMMENDATION METHOD AND APPARATUS, AND ELECTRONIC DEVICE AND STORAGE MEDIUM**

(30) Priority: 04.08.2022 CN 202210934725
(71) Applicant: Beijing Zitiao Network Technology Co., Ltd., Beijing 100190 (CN)
(72) Inventor: WANG, Huichuan, Beijing 100028 (CN); YANG, Linkai, Beijing 100028 (CN); YANG, Yuhao, Beijing 100028 (CN)
(74) Representative: Dentons UK and Middle East LLP
(86) International application number: PCT/CN2023/110075
(87) International publication number: WO 2024/027606

(57) **Abstract**

The disclosure discloses a method, an apparatus, an electronic device and storage medium for information recommendation. The method of information recommendation includes: in response to a detected object selection operation, determining selected object information corresponding to a selected object identification and an associated recommendation information of at least one associated recommendation object (S110); generating a plurality of selection presenting controls based on the selected object information and the associated recommendation information, determining a plurality of selection recommendation controls based on the plurality of selection presenting controls and a current display control in a current display page (S120); and generating, based on the plurality of selection recommendation controls, a selection recommendation page to be dynamically presented, and presenting the selection recommendation page dynamically (S130). The present disclosure implements dynamic adjustment of recommendation information based on the selection of the user, which makes the presented recommendation information more consistent with the user's preference, and thus improves the effectiveness of the information recommended based on the user's preference.

## Description

This application claims priority to Chinese Patent Application No. 202210934725.2, filed on August 04, 2022, and the entire content of which is incorporated herein by reference.

### FIELD

The present disclosure relates to the technical field of information recommendation, and for example, relates to a method, an apparatus, an electronic device, and storage medium for information recommendation.

### BACKGROUND

With the continuous development and increasing popularity of computer networks, people can easily obtain a wide range of information resources. In applications, the user experience is usually improved by recommending resources related to the resources that the user is interested in. However, when the user has no history information, it is not possible to accurately push the information that the user is interested in, which makes the information recommendation effect poor and difficult to implement effective information recommendation.

### SUMMARY

The present disclosure provides a method, an apparatus, an electronic device, and storage medium for information recommendation to implement dynamically adjusting the recommended information based on the selection of the user, so that the displayed recommended information is more in line with the preferences of the user, which in turn enhances the effectiveness of the information recommended based on the preferences of the user

According to a first aspect, the present disclosure provides a method of information recommendation, including:
in response to a detected object selection operation, determining selected object information corresponding to a selected object identification and an associated recommendation information of at least one associated recommendation object,
generating a plurality of selection presenting controls based on the selected object information and the associated recommendation information, determining a plurality of selection recommendation controls based on the plurality of selection presenting controls and a current display control in a current display page; and
generating, based on the plurality of selection recommendation controls, a selection recommendation page to be dynamically presented, and presenting the selection recommendation page dynamically.

According to a second aspect, the present disclosure further provides a method of information recommendation, including:
in response to a received associated recommendation request, determining a selected object identification corresponding to the associated recommendation request;
determining selected object information based on the selected object identification;
determining at least one associated recommendation object based on a similarity between a candidate recommendation object and the selected object identification, obtaining associated recommendation information of the associated recommendation object; and
sending the selected object information and the associated recommendation information of the at least one associated recommendation object to a client.

According to a third aspect, the present disclosure further provides an apparatus for information recommendation, including:
a selection information obtaining module configured to determine, in response to a detected object selection operation, the selected object information corresponding to the selected object identification and an associated recommendation information of at least one associated recommendation object;
a selection recommendation control module configured to generate a plurality of selection presenting controls based on the selected object information and the associated recommendation information, and determine a plurality of selection recommendation controls based on the plurality of selection presenting controls and a current display control in a current display page; and
a selection recommendation page module configured to generate a selection recommendation page to be dynamically presented based on the plurality of selection recommendation controls, and present the selection recommendation page dynamically.

According to a fourth aspect, the present disclosure further provides an apparatus for information recommendation, including:
a selected object identification module configured to determine a selected object identification corresponding to a recieved associated recommendation request in response to the received associated recommendation request.
a selected object information module configured to determine selected object information based on the selected object identification;
an associated recommendation information module configured to determine at least one associated recommendation object based on a similarity between a candidate recommendation object and the selected object identification, and obtain associated recommendation information of the associated recommendation object; and
an information feedback module configured to send the selected object information and the associated recommendation information of the at least one associated recommendation object to a client.

According to a fifth aspect, the present disclosure further provides an electronic device, including:
one or more processors;
a storage device configured to store one or more programs; and
when the one or more programs are executed by the one or more processors, the one or more processors are caused to implement the method of information recommendation described above.

According to a sixth aspect, the present disclosure further provides a storage medium including computer-executable instructions, the computer-executable instructions, when executed by a computer processor, being for performing at least one of the following: a method of information recommendation described above.

According to a seventh aspect, the present disclosure further provides a computer program carried on a non-transitory computer readable medium, the computer program comprising a program code for performing at least one of the following: a method of information recommendation described above.

### BRIEF DESCRIPTION OF DRAWINGS

FIG. 1A is a schematic flowchart of a method of information recommendation according to an embodiment of the present disclosure;
FIG. 1B is a schematic page diagram of a display page according to an embodiment of the present disclosure;
FIG. 1C is a schematic page diagram of a further display page according to an embodiment of the present disclosure;
FIG. 2A is a schematic flowchart of a further method of information recommendation according to an embodiment of the present disclosure;
FIG. 2B is a schematic page diagram of a core object recommendation page according to an embodiment of the present disclosure;
FIG. 2C is a schematic page diagram of a selection recommendation page according to an embodiment of the present disclosure;
FIG. 2D is a schematic page diagram of a further core object recommendation page according to an embodiment of the present disclosure;
FIG. 2E is a schematic page diagram of a further selection recommendation page according to an embodiment of the present disclosure;
FIG. 3A is a schematic flowchart of a further method of information recommendation according to an embodiment of the present disclosure;
FIG. 3B is a schematic page diagram of a type recommendation page according to an embodiment of the present disclosure;
FIG. 4 is a schematic flowchart of a further method of information recommendation according to an embodiment of the present disclosure;
FIG. 5 is a schematic flowchart of a further method of information recommendation according to an embodiment of the present disclosure;
FIG. 6 is a structural block diagram of an apparatus for information recommendation according to an embodiment of the present disclosure;
FIG. 7 is a structural block diagram of a further apparatus for information recommendation according to an embodiment of the present disclosure;
FIG. 8 is a schematic structural diagram of an electronic device according to an embodiment of the present disclosure.

### DETAILED DESCRIPTION

Embodiments of the present disclosure will be described below with reference to the accompanying drawings. While some embodiments of the present disclosure are shown in the drawings, the present disclosure may be implemented in a variety of forms, and these embodiments are provided to understand the present disclosure. The drawings and embodiments of the present disclosure are for example purposes only.

The plurality of steps documented in the method embodiments of the present disclosure may be performed in a different order, and/or in parallel. Furthermore, the method embodiments may include additional steps and/or omit performing the illustrated steps. The scope of the present disclosure is not limited in this regard.

The term "including" and variations thereof, as used herein, is open-ended, i.e., "including" The term "based on" is "based at least in part on" The term "one embodiment" means "at least one embodiment"; the term "another embodiment" means "at least one additional embodiment"; and the term "some embodiments" means "at least some embodiments". Definitions of other terms will be given in the following description.

The concepts of "first", "second" and the like mentioned in the present disclosure are only used to distinguish different apparatuses, modules or units, and are not intended to limit the order or interdependence of the functions performed by these apparatuses, modules or units.

The modifications of "one" and "more than one" mentioned in the present disclosure are schematic and not restrictive, it should be understood by those skilled in the art that "one or more" is to be understood unless the context clearly indicates otherwise.

The names of the messages or information interacting between the plurality of apparatuses of the presently disclosed embodiments are for illustrative purposes only and are not intended to place limitations on the scope of those messages or information.

Before the technical solution disclosed by the embodiment of the present disclosure is used, the type, the use range, the use scene and the like of the personal information involved in the disclosure should be informed to the user and obtain the authorization of the user in an appropriate manner according to relevant laws and regulations.

For example, before in response to a detected object selection operation, in response to an active request of the user being received, prompt information is sent to the user to explicitly prompt the user, and the operation requested to be executed will need to obtain and use the personal information of the user. Thus, the user is caused to independently choose whether or not to provide the personal information to software or hardware, such as an electronic device, an application, a server, or a storage medium, that performs the operation of the technical solution of the present disclosure based on the prompt information.

As an implementation, in response to receiving the active request of the user, the manner of sending the prompt information to the user may be, for example, a pop-up window, and the prompt prompt information may be presented in a text manner in the pop-up window. In addition, the pop-up window may further carry a selection control for the user to select "agree" or "not agree" to provide personal information to the electronic device.

The foregoing notifying and obtaining user authorization processes are merely illustrative, implementations of the present disclosure are not limited, and other manners of satisfying related laws and regulations may also be applied to implementations of the present disclosure.

Before describing the present technical solution, application scenarios may be illustrated exemplarily. The technical solution of the present disclosure may be applied in a page presentation of recommendation information, for example, it may be applied in a music playing application when presenting a recommendation object for a user.

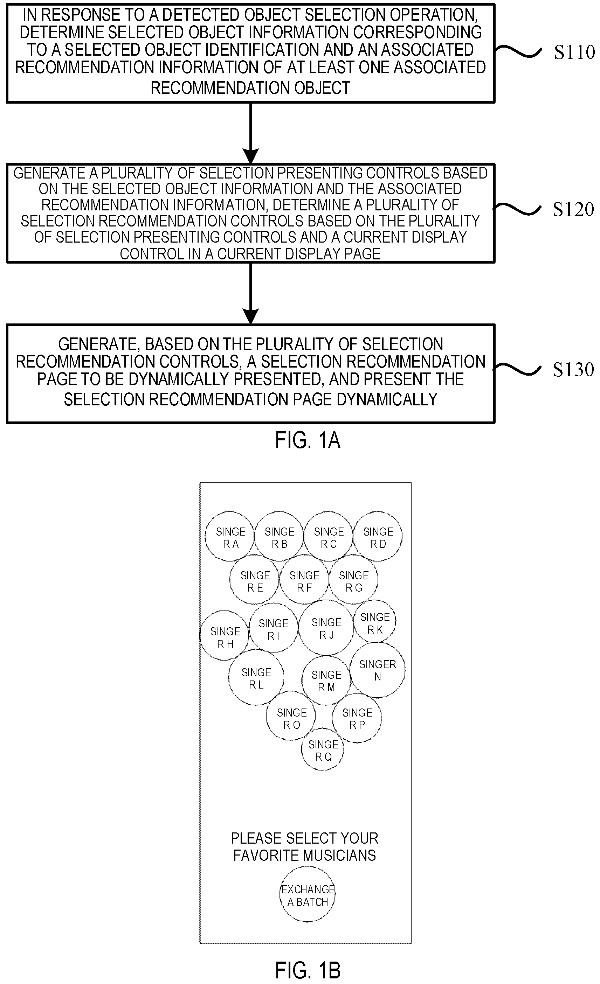

FIG. 1A is a schematic flowchart of a method of information recommendation according to an embodiment of the present disclosure. The present embodiments may be applicable in a scenario for dynamically presenting recommendation information in a page presenting scenario of recommendation information supported by the Internet, and the method may be executed by an apparatus for information recommendatione, which may be implemented in the form of software and/or hardware, which may be an electronic device, such as a mobile terminal, a personal computer (PC) terminal, or a server, and the like. Arbitrary methods of information recommendation are usually implemented by a client and a server in cooperation, and the methods provided in this embodiment may be executed by a server, executed by a client, or executed by the cooperation of a client and a server.

As shown in FIG. 1A, the method of this embodiment includes the following.

At S110, in response to a detected object selection operation, selected object information corresponding to a selected object identification and an associated recommendation information of at least one associated recommendation object are determined.

The apparatus for performing the method of information recommendation provided in the embodiments of the present disclosure may be integrated into application software that supports the recommendation function, and the software may be installed in the electronic device, and the electronic device may be a mobile terminal or a PC terminal. The application software may be a type of software including information recommendation, and details are not described herein again, as long as information recommendation may be implemented.

When the information is recommendation for the user, the presentation space of the information recommendation page is limited, and the recommendation information presented under the condition that the user interest is unknown cannot cover all types of information, resulting in poor information recommendation effect. In order to solve the above technical problem, this embodiment performs a secondary recommendation through the information selected by the user, and recommends information associated with the information selected by the user, so that the user can select the information of interest to the user. Taking a music playing program as an example, the object may be a singer or music. The client may recommend similar singers or music for the user based on the singer or music selected by the user.

**In** this embodiment, the object selection operation may be an operation of selecting the recommendation object by the user, and when it is detected that the recommendation object is selected by the user, that is, after the object selection operation is performed, the recommendation object is used as the selected object, and the selected object identification of the selected object is determined. The selected object identification may be an identification of the currently displayed selected object, the presentation form of the selected object identification may be in the form of a text and / or a picture, the selected object identification may be information such as a name and an avatar of the selected object, or may be an album cover having a recognition degree for the selected object, or the like, for example, "singer A" displayed in the current display page, as shown in FIG. 1B. After the selected object identification is determined, the selected presentation information corresponding to the selected object identification is determined, and the selected presentation information is used as the selected object information, wherein the selected presentation information or the selected object information may be information presented on the selected object after the recommendation object is selected as the selected object, and the selected object information may be an avatar, an image, or the like of the singer or the music, for example, when the selected object identification is the name of the selected object, the selected object information can be the avatar of the selected object. In this embodiment, at least one associated recommendation object similar to the selected object may also be determined, and the information of the associated recommendation object is used as the associated recommendation information to update the recommendation presenting page based on the obtained information. Herein, the associated recommendation information is similar to the selected object information and may be information displayed when the associated recommendation object is presented, for example, the associated recommendation information may be an avatar of the associated recommendation object.

**In** an implementation, in response to a detected object selection operation includes: in response to an object selection operation triggered by a user on a current display page. The current display page may be a recommendation presenting page. The initial recommendation information may be first obtained and displayed in the recommendation presenting page, and when the user is interested in the initial recommendation information in the recommendation presenting page, the object selection operation may be triggered by selecting the initial recommendation information.

The selected object information corresponding to the selected object identification and the associated recommendation information of the at least one associated recommendation object may be locally determined at the client or may be obtained from the server. When the local storage space of the client is sufficient, the information of the plurality of recommendation objects may be stored locally at the client, so as to quickly obtain the display when the information recommendation is performed. When the local storage space of the client is limited, the information of the plurality of recommendation objects may be stored in the server, and when the client needs to obtain the related information, the client requests to obtain the information. The number of the associated recommendation object may be set according to actual requirements, for example, the number of the associated recommendation object may be three, that is, after the user selects one recommendation object, three associated object similar to the recommendation object are displayed.

**In** an implementation of the present disclosure, determining selected object information corresponding to a selected object identification and an associated recommendation information of at least one associated recommendation object includes: requesting, based on the selected object identification, the server to obtain selected object information corresponding to the selected object identification and associated recommendation information of at least one associated recommendation object. When the client detects an object selection operation triggered by the user, an association recommendation request is generated based on the selected object identification and sent to the server, and the server determines, based on the selected object identification, the selected object information corresponding to the selected object identification and the association recommendation information of the at least one association recommendation object, and sends the determined information to the client.

At S120, a plurality of selection presenting controls are generated based on the selected object information and the associated recommendation information, and a plurality of selection recommendation controls are determined based on the plurality of selection presenting controls and a current display control in a current display page.

After determining the selected object information and the associated recommendation information, the control corresponding to the above information is generated as the selection presenting control, and the selection presenting control is for displaying in the selection recommendation page. Considering that after the user selects an object, there is also a requirement of selecting a further object, or before the user selects an object, other object have been selected, and when displaying the selected object and the associated recommendation object, a display control corresponding to the selected object information and the associated recommendation information needs to be added on the basis of the presented control of the current display page. Therefore, after generating the selection presenting control based on the selected object information and the associated recommendation information, a new recommendation presenting page is not generated based on the selection presenting control, but the selection presenting control is dynamically added on the basis of the current display page to generate a new recommendation presenting page.

**In** this embodiment, the process of the user performing the object selection operation may be a process in which the user selects the control corresponding to the selected object in the current display page. As shown in FIG. 1B, the user triggers a control corresponding to a singer A, the electronic device executing the technical solution of the present disclosure, in response to the object selection operation, determines the selected object information and the associated recommendation information of the at least one associated recommendation object corresponding to the "singer A", generates a selection presenting control corresponding to the selected object information based on the selected object information, and generates a selection presenting control corresponding to the associated recommendation information based on the associated recommendation information. The selection presenting control corresponding to the associated recommendation information is for recommending and presenting the control selected by the user, and the selection presenting control corresponding to the selected object information is for performing effect presentation on the control selected by the user. Therefore, the control selected by the user needs to be replaced with the selection presenting control corresponding to the selected object information, and other control in the current display page still need to be presented. Based on this, other controls and a plurality of selection presenting controls other than the user selection control in the current display page may be used as the selection recommendation controls for presenting in the selection recommendation page.

The selection presenting control may be in a bubble shape to visualize the presentation.

At S130, a selection recommendation page to be dynamically presented is generated based on the plurality of selection recommendation controls, and the selection recommendation page is presented dynamically.

After determining the selection recommendation control, the selection recommendation control is dynamically presented in the selection recommendation page, and the selection recommendation page is displayed. Herein, the dynamic presentation of the selection recommendation control in the selection recommendation page may be: randomly changing the presentation position of the selection recommendation control and presenting the presenting effect of the plurality of selection recommendation controls based on the presentation positions of the plurality of selection recommendation controls. For example, the selection recommendation control may be circular, for example, presented in a shape of a bubble, a sphere, or the like. The dynamic presenting effect of the selection recommendation control is implemented through the circular selection recommendation control. Corresponding to the scenario in which the user selected object determines the similar object and performs recommendation presentation provided in this embodiment, a presenting control of an association recommendation object can be provided with the presenting control of the selected object as the base, and gradually move the presented dynamic effect, that is, through the user selection of an object, generating a dynamic effect presented by the plurality of object presentings. The dynamic presenting of the circular selection recommendation control may present the presenting effect of generating a plurality of objects based on one object. Taking the selection recommendation control as a bubble shape presentation for example, the presentation control of the association recommendation object can be dynamically presented in the form of bubble bubbling from the presentation position of the selected object. During the movement of the selection recommendation control, when the presenting areas of the two selection recommendation controls are in contact, or when the selection recommendation control is in contact with other presenting controls, a collision effect of the selection recommendation control can be presented. Herein, the presenting control is the selected presenting control in the above embodiment, or it may be the selection recommendation control.

The selection recommendation page provided in this embodiment is not limited to the same size as the terminal display interface. The selection recommendation page may be greater than the terminal display interface, and the user may slide the presenting area of the selection recommendation page by triggering a sliding control, so that the selection recommendation page can be fully presented.

**In** order to improve the presenting effect of the associated recommendation information, the associated associated recommendation objects may be presented centrally. Based on this, the dynamically pressented selection recommendation page includes at least one of the following: adjusting, based on a positional relationship of the plurality of selection recommendation controls and according to a predetermined movement rule, a presentation position of a selection recommendation control in the selection recommendation page, so that the selection recommendation control with the adjusted presentation position is dynamically presented in the selection recommendation page; or adjusting, based on the positional relationship of the plurality of selection recommendation controls, the presentation position of the selection recommendation control in the selection recommendation page randomly, so that the selection recommendation control with the adjusted presentation position is dynamically presented in the selection recommendation page. That is, the positional relationship of the plurality of selection recommendation controls may be determined based on the association relationship of the associated recommendation object corresponding to the plurality of selection recommendation controls, the positional relationship of the plurality of selection recommendation controls is maintained unchanged, the presentation position of the selection recommendation control is adjusted according to the predetermined movement rule or randomly, and the selection recommendation control is dynamically presented.

Based on the foregoing solution, in order to improve the presenting effect of the associated recommendation object that is similar to the selected object, the selection recommendation control corresponding to the selected object and the selection recommendation control corresponding to the associated recommendation object may be presented centrally. In an embodiment, the selection presenting control includes a selected object control corresponding to the selected object information and a plurality of associated recommendation controls corresponding to the associated recommendation information, and a position relationship of the plurality of selection recommendation controls includes: presenting the plurality of associated recommendation controls centered around the selected object control; or presenting the plurality of associated recommendation controls sequentially in adjacent rows of the selected object control.

With the selected object control as the center, the plurality of associated recommendation controls presenting around the selected object control may be centered around a feature point (such as a center point, an edge coordinate point, etc.) of the selected object control, and the plurality of associated recommendation controls are distributed around the selected object control. Herein, the plurality of associated recommendation controls may be uniformly distributed around the selected object control, or may be randomly distributed around the selected object control for presenting.

Alternatively, the plurality of associated recommendation controls are presented in adjacent rows of the selected object control. The presenting control in the interactive presenting page may be ptresented through a plurality of rows, and each row may present a presenting control of a plurality of presenting objects. When the user selects one presenting control in the interactive presenting interface, a plurality of associated recommendation objects may be generated based on the selected object, and the presenting control of the associated recommendation object is presented adjacent to the presenting control of the selected object, for example, may be sequentially presented in the previous or next row of the selection presenting control. Based on this, the number of associated recommendation object may be determined based on the number of presenting control of each row in the interactive presenting interface, for example, the number of associated recommendation object may be the same as the number of presenting control of each row in the interactive presenting interface. Taking a previous row of presenting controls on the selected presenting control as an example, it is assumed that the interactive presenting page currently includes m rows of presenting controls, the user clicks on one presenting control of the nth row, the presenting control of the plurality of associated recommendation objects corresponding to the presenting control may be presented in the (n + 1) th row of order, and the presenting control after the original (n + 1) th row may be adapted to the down presentation position.

**In** an implementation of the present disclosure, the selection recommendation page to be dynamically presented comprises a plurality of selection recommendation sub-pages, and the generating a selection recommendation page to be dynamiceally presented based on the plurality of selection recommendation controls, and presenting the selection recommendation page dynamically comprises: generating, based on the plurality of selection recommendation controls, at least two frames of selection recommendation sub-page presented based on a temporal order; and presenting, based on a presenting order of the at least two frames of selection recommendation sub-page, the at least two frames of selection recommendation sub-page in sequence. The dynamic presenting of the selection recommendation control in the selection recommendation page may be implemented as a continuous presenting of the multi-frame selection recommendation sub-page, wherein the presentation position of the selection recommendation control in each frame of selection recommendation sub-page is different. Herein, the number of selecton recommendation sub-page may be determined according to a dynamic presenting time or a dynamic presenting effect. In the client computing capability range, the more the number of the selection recommendation sub-page is set, the better the presenting effect of the selection recommendation page is.

The generating, based on the plurality of selection recommendation controls, at least two frames of selection recommendation sub-page presented based on a temporal order comprises: determining, based on a presenting order of the at least two frames of selection recommendation sub-page, the position information of the plurality of selection recommendation controls in each frame of selection recommendation sub-page; for each frame of the selection recommendation sub-page, set positions of the plurality of selection recommendation controls based on the position information of the plurality of selection recommendation controls in the selection recommendation sub-page, and obtain the selection recommendation sub-page. The presentation position of the selection recommendation control in the selection recommendation sub-page may be set according to the presenting order of the at least two selection recommendation sub-pages, to implement the dynamic presenting of the selection recommendation page. The presentation position of the selection presenting control in the selection recommendation sub-page may be set randomly per frame to implement the random dynamic presenting of the selection recommendation page, and the presentation position of the selection recommendation control in the selection recommendation sub-page may be set based on the predetermined moving rules to implement the regular presenting of the selection recommendation control in the selection recommendation page.

According to the technical solution of the embodiment, in response to a detected object selection operation, selected object information corresponding to a selected object identification and an associated recommendation information of at least one associated recommendation object are determined; a plurality of selection presenting controls are generated based on the selected object information and the associated recommendation information, a plurality of selection recommendation controls are determined based on the plurality of selection presenting controls and a current display control in a current display page; and a selection recommendation page to be dynamically presented is generated based on the plurality of selection recommendation controls, and the selection recommendation page is presented dynamically. When the user selects a recommended object, similar recommendation information can be generated based on the object selected by the user for presenting, the presenting efficiency of the recommendation information is improved, meanwhile, the recommendation information is dynamically presented, the richness and interest of the picture content are improved, and the interaction effect with the user is further enhanced.

Based on the above solution, the method further includes: in response to a detected object refresh operation, determining refresh recommendation information for at least one refresh recommendation object; generating at least one refresh display control based on the refresh recommendation information, generating a refresh display page for dynamic presenting based on the at least one refresh display control, and dynamically presenting the refresh display page. When the user is not interested in the presenting object corresponding to the presenting control in the current display page, the user may trigger the refresh control, and the client detects the object refresh operation triggered by the user for the refresh presenting of the presenting control in the recommendation presenting page. The client can locally obtain the refresh recommendation information of the refresh recommendation object or request the server to obtain the refresh recommendation information of at least one refresh recommendation object. When the client obtains the refresh recommendation information of the refresh recommendation object locally, if the user has selected the recommendation object, the refresh recommendation object can be obtained based on the recommendation object that has been selected by the user, and if the user has not selected the recommendation object, the unrecommended object is obtained as the refresh recommendation object. After obtaining the refresh recommendation information, a refresh display control corresponding to the refresh recommendation information can be generated, and the refresh display control can be dynamically presented in the refresh display page. Herein, the refresh recommendation control can be randomly presented in the refresh display page, and can also be presented in the refresh display page according to certain presenting rules.

**In** order to improve the presenting effect of the refresh display control, in an implementation, the generating a refresh display page for dynamic presenting based on the at least one refresh display control includes: determining a presentation position relationship of the at least one refresh recommendation object based on a heat indicator of the at least one refresh recommendation object; adjusting, based on the presentation position relationship, a presentation position of the at least one refresh display control corresponding to the at least one refresh recommendation object, so that the at least one refresh display control is dynamically presented in the refresh display page. The presentation position relationship of the at least one refresh recommendation control may be set based on a heat indicator of the at least one refresh recommendation object, thereby determining the presentation position of each refresh recommendation control. In order to make the recommendation object with the highest heat level present in a conspicuous presentation position, the refresh display control corresponding to the refresh presenting object with the highest heat level may be centered around the refresh display control, and other refresh display controls may be presented around the refresh display control. Herein, the dynamic display of the refresh display control can refer to the dynamic presenting of the selection recommendation control in the above-described embodiment, and will not be repeated herein.

On the basis of the above solution, the method further comprises: in response to a terminal rotation operation, the current display page is rotated for display adapted to the terminal rotation operation, wherein a display control in the current display page adaptively changes dynamically. It can be combined with the terminal engine to detect the page presenting direction and adjust the presenting state of the current display page. Taking the terminal as a cell phone as an example, when the user rotates the cell phone, the terminal engine can detect the rotation operation of the cell phone, and the client can receive the terminal rotation operation detected by the terminal engine and adjust the presenting state of the presenting controls, so that the presenting of the presenting controls can be adapted to the rotation of the terminal. For example, the presenting direction and movement state of the presenting control can be adjusted so that the presenting of the current display page is adapted to the rotation of the terminal. By way of example, assuming that the presenting control is in the shape of a bubble, and the initial direction of the terminal is vertical, the presenting direction of the presenting control is vertical, and the bubble-shaped presenting control can rise and move in the vertical direction; if it receives that the terminal rotates in the horizontal direction, it adjusts the presenting direction and the moving direction of the presenting control so that its presenting direction is horizontal and it rises and moves in the horizontal direction. In the process of adjusting the presentation, the presenting controls may collide with each other, and the presenting state of the presenting controls may also be adjusted based on the collision, such as adjusting the presenting state of the presenting controls to rupture and disappear after detecting the collision of the presenting controls. Dynamic adjustment of the display page based on the terminal operation makes the display page change dynamically with the change of the physical engine, which makes the display page can be effectively presented in different states and also enhances the interest of the page presenting.

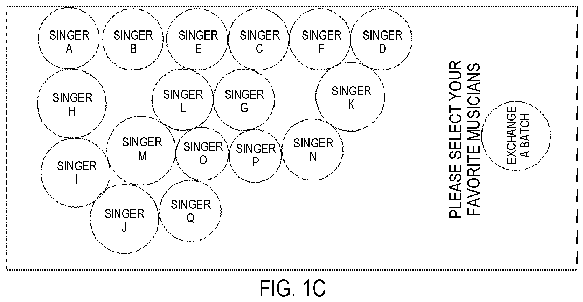

FIG. 1B is a schematic page diagram of a display page according to an embodiment of the present disclosure. As shown in FIG. 1B, the terminal direction is a vertical direction, the name of the performer is presented in the current display interface through a circular control, the presenting direction of the circular control is a vertical direction, and the rising direction is a vertical direction. FIG. 1C is a schematic page diagram of a further page according to an embodiment of the present disclosure. FIG. 1C schematically presents an adjustment manner of the display page after the terminal rotates from the vertical direction to the horizontal direction. As shown in FIG. 1C, the terminal direction is a horizontal direction, the name of the performer is presnted in the current display interface through the circular control, the presenting direction of the circular control is a horizontal direction, and the rising direction is a horizontal direction.

The prompt prompt information needs to be sent to the user in advance to explicitly prompt the user, and the operation performed by the user will need to obtain and use the operation information of the user. Thereby, the user is enabled to independently choose whether or not to provide its operation information to software or hardware such as an electronic device, an application program, a server, or a storage medium that performs an operation of the technical solution of the present disclosure in accordance with the prompt information, and when the user knows and agrees with the above prompt information, the user can obtain the operation information of the terminal detected by the terminal engine, such as the terminal rotation operation information.

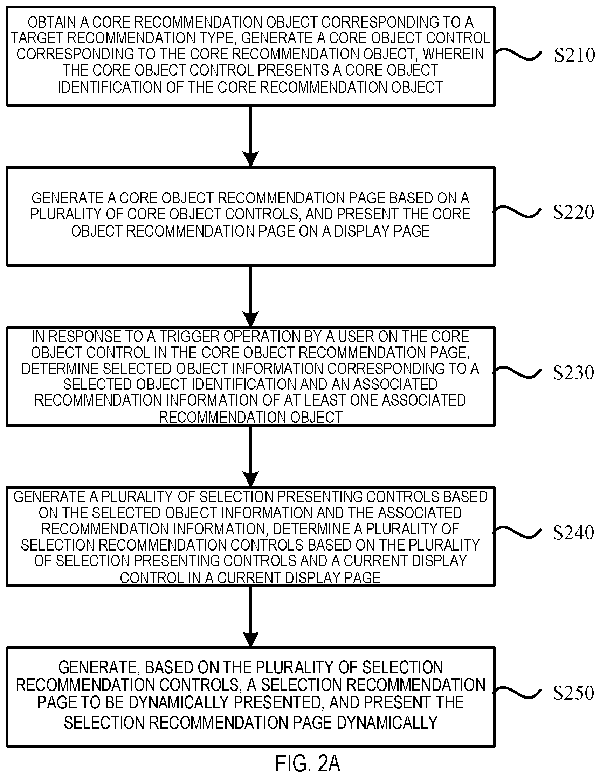

FIG. 2A is a schematic flowchart of a further method of information recommendation according to an embodiment of the present disclosure. The present embodiments illustrate the generation of an object recommendation page. Herein, technical terms that are the same as or corresponding to the above embodiments are not repeated herein. As shown in FIG. 2A, the method comprises the following steps.

At S210, a core recommendation object corresponding to a target recommendation type is obtained, and a core object control corresponding to the core recommendation object is generated, wherein the core object control presents a core object identification of the core recommendation object

**In** this embodiment, the recommendation object is determined based on the recommendation type, and then the object presenting control representing the recommendation object is generated in the object recommendation page.

**In** general, the recommendation object may be divided into different recommendation types according to the characteristics of the recommendation object, and the recommendation object is presented based on the recommendation type. Taking a music playing program as an example, the object is a performer, and the type may be a music genre. The singer is recommended for the user according to the music genre. Different singers can be divided into different recommendation types based on music genre, and singers can be used as recommendation objects to implement the recommendation of singers based on music genre.

**In** order to improve the recommendation effect of a recommendation object of a target recommendation type, a core recommendation object within that target recommendation type may be recommended. Taking music recommendation as an example, the same music genre corresponds to a large number of music or singers, and some of the music or singers have a higher heat level, which can be recommended as a core recommendation object so that a user can obtain a lower heat level recommendation object similar to it based on the higher heat level recommendation object. Based on this, the recommendation objects can be divided into core recommendation objects and similar recommendation objects based on the heat of the recommendation objects, and when the display of the object recommendation page is performed, the core recommendation objects are displayed in priority.

**In** this embodiment, the client may obtain the core recommendation object of the target recommendation type from the local, or may want to request the server to obtain the core recommendation object of the target recommendation type. The number of core recommendation objects can be set according to actual needs, such as setting the number of core recommendation objects to 24.

The target recommendation type may be a default recommendation type or a user-selected recommendation type. That is, the obtaining a core recommendation object corresponding to a target recommendation type comprises: requesting from a server to obtain the core recommendation object corresponding to a default recommendation type; or in response to a detected type selection operation, requesting from the server to obtain the core recommendation object corresponding to a selected type identification. When the user has not selected a recommendation type, the core recommendation object of the default recommendation type may be obtained from the server, and when the user has selected a recommendation type, the core recommendation object corresponding to the selected type identification may be obtained from the server.

When generating the core object control, a identification of the core recommendation object may be presented on the core object control to enable the user to determine the recommendation object corresponding to the core object control based on the presented core object identification. The core object identification may be presented in the form of text and/or pictures, such as may be information such as a name, an avatar, etc., of the core recommendation object, and may be an album cover, etc., of the core recommendation object having recognizable features.

At S220, a core object recommendation page is generated based on a plurality of core object controls, and the core object recommendation page is presented on a display page.

A dynamically presented core object recommendation page may be generated based on the plurality of core object controls to improve the presenting effect of the core object recommendation page. The implementation can be referred to the presentation of the selection recommendation page in the above embodiments and will not be repeated here.

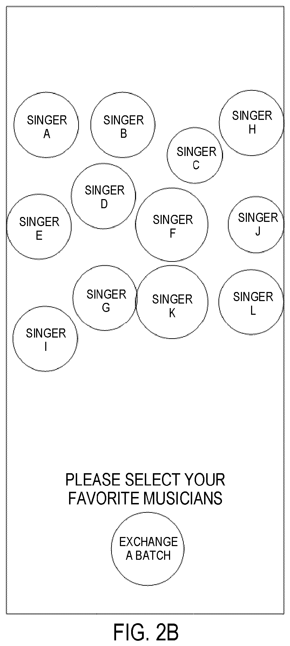

FIG. 2B is a schematic page diagram of a core object recommendation page according to an embodiment of the present disclosure. The core object recommendation page is illustrated exemplarily in FIG. 2B with an example of the recommendation object as a recommended singer. As shown in FIG. 2B, a plurality of recommended singers are presented, and each recommended singer is presented as a circular control. A user can trigger a selection operation on the corresponding singer by clicking on the control.

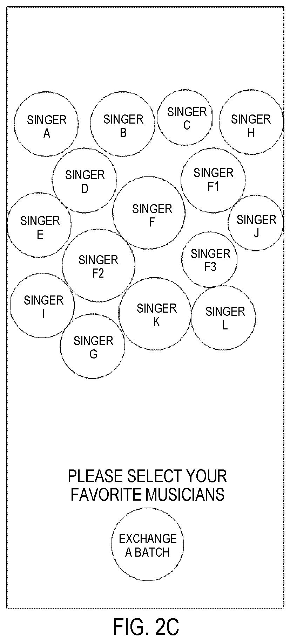

FIG. 2C is a schematic page diagram of a selection recommendation page according to an embodiment of the present disclosure. FIG. 2C illustrates, on the basis of FIG. 2B, the presenting manner of a selection recommendation page by taking a user clicking on a "Singer F" presenting control as an example. Referring to FIG. 2C, after the user clicks on the "Singer F" control, the corresponding associated recommendation objects are presented around it, i.e., a "Singer F1", "Singer F2" and "Singer F3" presented around the "Singer F" control in the figure. The presenting controls of the associated recommendation objects can be added with an identification of the recommendation object.

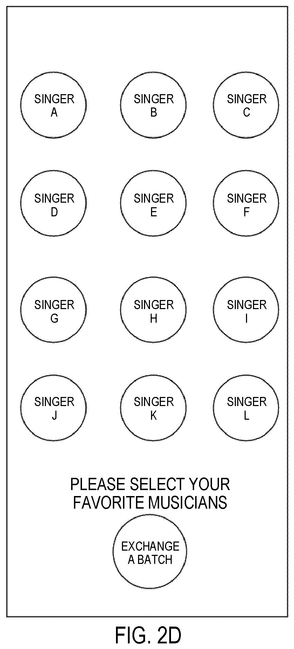

FIG. 2D is a schematic page diagram of a further core object recommendation page according to an embodiment of the present disclosure. The core object recommendation page is illustrated exemplarily in FIG. 2D with an example of the recommendation object as a recommended singer. As shown in FIG. 2D, a plurality of recommended singers are presented in the figure by row and column regularity, and each recommended singer is presented in a circular control. A user can click on the control to trigger a selection operation for the corresponding singer.

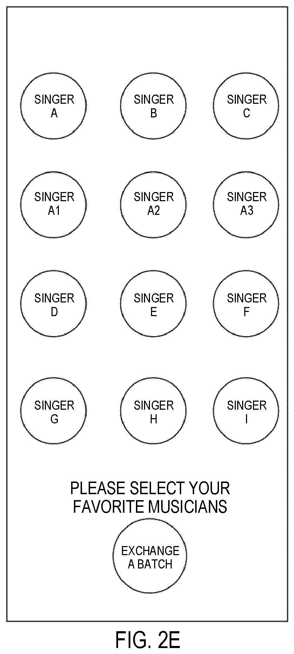

FIG. 2E is a schematic page diagram of a further selection recommendation page according to an embodiment of the present disclosure. FIG. 2E illustrates, on the basis of FIG. 2D, the presenting manner of the selection recommendation page by taking the user clicking on the "Singer A" presenting control as an example. With reference to FIG. 2E, after the user clicks on the "Singer A" control, its corresponding associated recommendation objects are presented in the next row, i.e., the "Singer A1", "Singer A2" and "Singer A3" in the next row of the "Singer A" control in the figure. The presenting controls of the associated recommendation objects can be added with the identification of the recommendation objects.

At S230, in response to a trigger operation by a user on the core object control in the core object recommendation page, selected object information corresponding to a selected object identification and an associated recommendation information of at least one associated recommendation object are determined.

**In** an embodiment, the core object identification includes a core object name, and correspondingly, determining the selected object information corresponding to the selected object identification includes: requesting to the server to get the core object avatar corresponding to the core object name as selected object information. When the core object is identified as the core object name, the core object avatar is determined as the selected object information to present the avatar of the selected recommendation object after the user selects the recommendation object.

At S240, a plurality of selection presenting controls are generated based on the selected object information and the associated recommendation information, and a plurality of selection recommendation controls are determined based on the plurality of selection presenting controls and a current display control in a current display page.

At S250, a selection recommendation page to be dynamically presented is generated based on the plurality of selection recommendation controls, and the selection recommendation page is presented dynamically.

According to the technical solution of the embodiment, the core recommendation object corresponding to the target recommendation type is obtained, the core object control corresponding to the core recommendation object is generated, the core object recommendation page is generated based on the plurality of core object control, the core object recommendation page is presented on the display page. The core recommendation object with the target recommendation type is presented in the recommendation presenting page, thus, the user is convenient to select the recommendation object of interest, and the presenting effect of the recommendation object is improved.

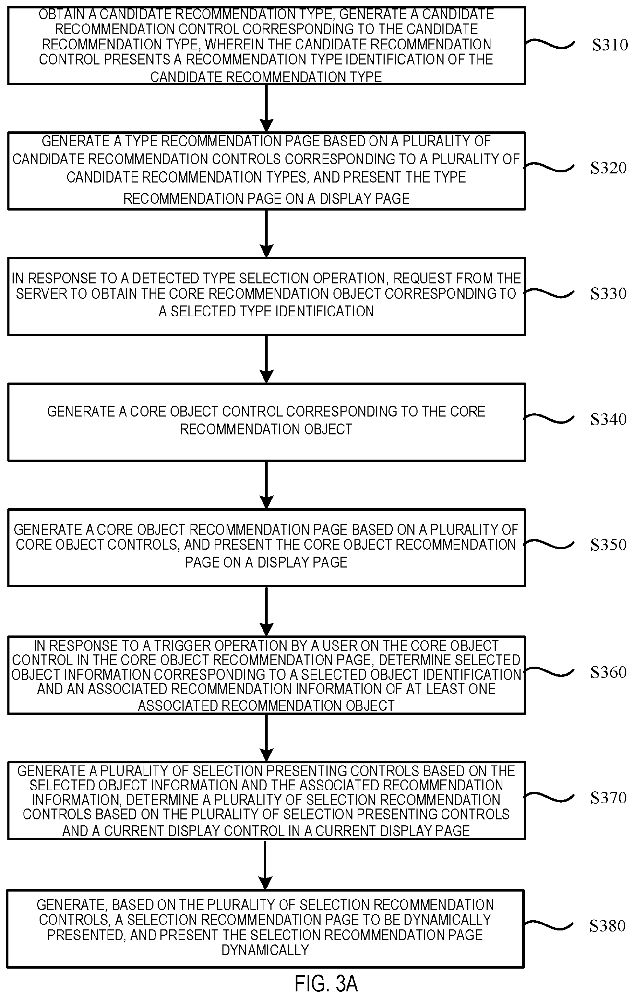

FIG. 3A is a schematic flowchart of a further method of information recommendation according to an embodiment of the present disclosure. On the basis of the foregoing embodiments, the generation of a type recommendation page is described. Herein, technical terms that are the same as or corresponding to the foregoing embodiments are not repeated herein.

As shown in FIG. 3A, the method includes the following steps.

At Step 310, a candidate recommendation type is obtained, and a candidate recommendation control corresponding to the candidate recommendation type is generated, wherein the candidate recommendation control presents a recommendation type identification of the candidate recommendation type.

**In** this embodiment, the client may obtain the candidate recommendation type from locally or may request the candidate recommendation type from the server. When the client obtains the candidate recommendation types from the local area, the recommendation types with a higher heat level can be taken as the candidate recommendation types. Take music recommendation as an example, the recommendation type corresponding to the first level of music genre (pop, rock and roll, R&B, Chinese style, folk, classical, light music, metal, Latin, jazz) can be determined as the candidate recommendation type, so that the recommendation type presented in the type recommendation page can cover the majority of the interest type of the user. The number of candidate recommendation types can be set according to the actual demand, such as setting the number of candidate recommendation types to 10.

After obtaining the candidate recommendation type, a candidate recommendation control is generated that presents the recommendation type identification of the candidate recommendation type, and the candidate recommendation type is presented through the candidate recommendation control. The recommendation type identification can be the type name of the candidate recommendation type. Taking music recommendation as an example, the recommendation type identification can be the name of the music genre.

At S320, a type recommendation page is generated based on a plurality of candidate recommendation controls corresponding to a plurality of ca.ndidate recommendation types, and the type recommendation page is presented on a display page.

The candidate recommendation control is dynamically presented in the type recommendation page, the implementation of which can be referred to the dynamic presentation of the selection recommendation page in the above embodiment, and will not be repeated herein. Herein, the candidate recommendation control may be presented by a regular shape or an irregular shape, such as the candidate recommendation control may be presented in the shape of a quadrilateral, a circle, an irregular polygon, and the like.

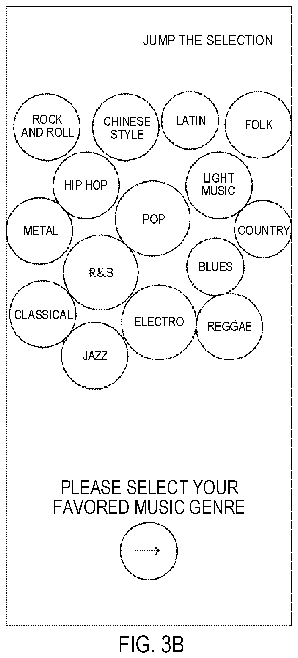

FIG. 3B is a schematic page diagram of a type recommendation page according to an embodiment of the present disclosure. The type recommendation page is illustrated exemplarily in FIG. 3B with the type being a music genre recommendation and the candidate recommendation control being a circle. As shown in FIG. 3B, a plurality of candidate recommendation types are presented, and each candidate recommendation type is presented as a circular control. The user can click on the control to trigger the selection operation of the corresponding type, click on the arrow control in the illustration to perform the next step after the selection is completed, or click on the " Jump Selection " control to jump over the selection of the type, and directly enter the selection page of the recommendation object. When the user clicks on the control corresponding to a type, the picture corresponding to the type is dynamically displayed on the control.

The type recommendation page may also be presented by the method provided in the above embodiment based on the rotation adjustment of the terminal. That is, the method also includes: in response to a terminal rotation operation, rotating the type recommendation page for display adapted to the terminal rotation operation, wherein a display control in the type recommendation page adaptively changes dynamically. The adjusting method can be referred to the adjusting method in the above-described embodiments and will not be repeated herein.

**At** Step S330, in response to a detected type selection operation, the server is requested to obtain the core recommendation object corresponding to a selected type identification .

After presenting the type recommendation page, the user can initiate a type selection operation by triggering the candidate recommendation control. After the client detects the type selection operation, it requests the server to obtain the core recommendation object corresponding to the selected type identification.

At S340, a core object control corresponding to the core recommendation object is generated.

At S350, a core object recommendation page is generated based on a plurality of core object controls, and the core object recommendation page is presented on a display page.

At S360, in response to a trigger operation by a user on the core object control in the core object recommendation page, selected object information corresponding to a selected object identification and an associated recommendation information of at least one associated recommendation object are determined.

At S370, a plurality of selection presenting controls are generated based on the selected object information and the associated recommendation information, a plurality of selection recommendation controls are determined based on the plurality of selection presenting controls and a current display control in a current display page.

At S380, a selection recommendation page to be dynamically presented is generated based on the plurality of selection recommendation controls, and the selection recommendation page is presented dynamically.

According to the technical solution of the embodiment, a candidate recommendation type is obtained, and a candidate recommendation control corresponding to the candidate recommendation type is generated; a type recommendation page is generated based on a plurality of candidate recommendation controls corresponding to a plurality of candidate recommendation types, and the type recommendation page is presented on a display page. In response to the detected type selected operation, it requests the server to obtain the core recommendation object corresponding to the selected type identification, which implements the presentation of the recommendation type, and implements the precise recommendation of the recommendation object and improves the effect of the information recommendation by performing the object recommendation based on the recommendation type selected by the user.

Based on the foregoing solution, the method further includes: in response to a detected type trigger operation, determining trigger type information corresponding to a trigger type identification; and generating a type trigger control based on the trigger type information, presenting the type trigger control dynamically in the type recommendation page. After presenting the type recommendation page, the user can initiate a type trigger operation by triggering the candidate recommendation control, and after the client detects the type trigger operation, it can determine the trigger type information corresponding to the trigger type identification, determine the type trigger control based on the trigger type information, and present the type trigger control dynamically. Herein, the dynamic presentation of the type trigger control may be a zoomed-in presentation, a highlighted presentation, and the like.

**In** an implementation, the trigger type identification is a trigger type name, and determining the trigger type information corresponding to the trigger type identification includes: requesting from the server to obtain the trigger type pattern corresponding to the trigger type name as the trigger type information. For each recommendation type, a presentation pattern corresponding to the recommendation type may be set for storage based on the characteristics of the recommendation type. After the user selects a recommendation type, the pattern corresponding to the type is obtained as the trigger type information, so that after the user clicks on a candidate recommendation control, the candidate recommendation control changes from the name of the presenting type to the dynamic presenting type pattern. This enables the user to have a corresponding response operation when performing an operation and improves the interactive effect.

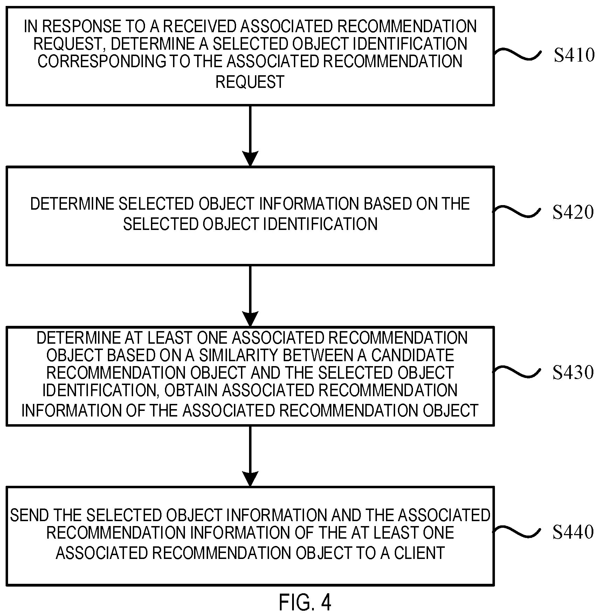

FIG. 4 is a schematic flowchart of a further method of information recommendation according to an embodiment of the present disclosure. The present embodiment may be applicable in a scenario for dynamically presenting recommendation information in a page presentation scenario of recommendation information supported by the Internet, and the method may be executed by an apparatus for information recommendation which may be implemented in the form of software and/or hardware, which may be an electronic device, such as a mobile terminal, a PC, or a server, and the like. The method provided in this embodiment may be executed by a server. As shown in FIG. 4, the method of this embodiment includes the following steps.

At S410, in response to a received associated recommendation request, a selected object identification corresponding to the associated recommendation request is determined.

**In** this embodiment, the related information of the recommendation object is stored in the server, and when the client detects the operation triggered by the user, the client requests the server to obtain the related information of the trigger operation.

The associated recommendation request may be a request initiated by the client, in response to an object selection operation triggered by the user, for obtaining selected object information corresponding to the selected object identification and association recommendation information for the at least one associated recommendation object.

When the server receives an association recommendation request, it parses the association recommendation request to determine the selected object identification carried in the association recommendation request.

At S420, selected object information is determined based on the selected object identification .

The server may query its corresponding information as the selected object information based on the selected object identification. Taking music recommendation as an example, the selected object information may be an avatar, an image, etc., of a singer or music.

At S430, at least one associated recommendation object is determined based on a similarity between a candidate recommendation object and the selected object identification, and associated recommendation information of the associated recommendation object is obtained.

**On** the basis of the above-described solution, an associated recommendation object that is similar to the selected object identification and associated recommendation information of the associated recommendation object are determined. Herein, a similarity between the candidate recommendation object and the selected object identification may be determined in advance and stored based on the selected object information.

At S440, the selected object information and the associated recommendation information of the at least one associated recommendation object are sent to a client .

After obtaining the selected object information and the associated recommendation information, the above information is sent to the client so that the client generates a corresponding control for display based on the above information.

According to the technical solution of the embodiment, it includes: in response to a received associated recommendation request, determining a selected object identification corresponding to the associated recommendation request; determining selected object information based on the selected object identification; determining at least one associated recommendation object based on a similarity between a candidate recommendation object and the selected object identification, obtaining associated recommendation information of the associated recommendation object; and sending the selected object information and the associated recommendation information of the at least one associated recommendation object to a client. Thus, pushing of associated objects that are similar to the selected object is implemented.

Based on the foregoing solution, the method further includes: obtaining a baseline recommendation object corresponding to each of a plurality of baseline recommendation types; and determining, for each baseline recommendation type, a core recommendation object corresponding to the baseline recommendation type based on a popularity of a plurality of baseline recommendation objects of the baseline recommendation type, and determining a similarity between the plurality of baseline recommendation objects based on evaluation information of the plurality of baseline recommendation objects in a plurality of evaluation dimensions. Recommendation objects can be divided into different types as baseline recommendation types based on the characteristics of the recommendation objects. For each baseline recommendation type, a core recommendation object of the baseline recommendation type is determined based on the heat level of all the baseline recommendation objects in the baseline recommendation type, and the similarity between all the baseline recommendation objects is determined based on the assessment information of the baseline recommendation objects. Herein, the heat level of the baseline recommendation object can be determined by the number of clicks on the baseline recommendation object and the like. Taking the singer recommendation as an example, by taking the singer as the baseline recommendation object and the music genre as the baseline recommendation category, it is possible to classify singers with the same music genre into the same recommendation category, and determine the singer with the highest heat level in the recommendation category, as well as determine the similarity between different singers. The heat level of a singer can be determined by the heat ranking of the singer, the amount of attention, and so on. The similarity between singers can be comprehensively assessed by the song style of the singer, the region to which the singer belongs, the heat level, and the age.

Based on the foregoing solution, the method further includes: in response to a received recommendation type obtaining request, determining a part of baseline recommendation types as a candidate recommendation type based on recommendation levels of the baseline recommendation type; and sending the candidate recommendation type to the client. When recommending an object for a new user, the recommendation type page can be presented first and the recommendation object can be recommended based on the type selected by the user to improve the recommendation efficiency. The client can initiate a recommendation type obtaining request to the server, and the server may send the generally concerned recommendation type as a candidate recommendation type to the client. Taking the singer recommendation as an example, the candidate recommendation type can be determined based on the music genre type, such as taking the first level music genre type as the candidate recommendation type, so that the candidate recommendation type can cover the type preference of most people.

**On** the basis of the above solution, the method further comprises: in response to a received recommendation object obtaining request, determining a selected type identification corresponding to the recommendation object obtaining request; and sending a core recommendation object of a baseline recommendation type corresponding to the selected type identification to a client. When the user selects a recommendation type, the object selection page can be triggered, at which time the client initiates a recommendation object obtaining request to the server to obtain the core recommendation object corresponding to the selected type identification selected by the user, so that the recommended object can cover most of the object preferences of the user. The core recommendation object can be obtained directly by querying the selected type identification.

Based on the foregoing solution, the method further includes: in response to the received object refresh request, determining a refresh type identification corresponding to the object refresh request; selecting, based on the heat level of the type recommendation object corresponding to the refresh type identification and/or the selected object identification, a refresh recommendation object from among the unrecommended objects corresponding to the refresh type identification; and sending the refresh recommendation object to the client. When the user is not interested in the objects in the current display page, or needs to obtain more recommendation objects, the object refresh operation can be triggered, and the client generates an object refresh request based on the object refresh operation to obtain the recommendation objects presented after the refreshing from the server. The server can select the refresh recommendation object according to the category of the refresh operation. When the user refreshes for the first time, the server can directly select the refresh recommendation object according to the recommendation type selected by the user. When the user is not refreshed for the first time, the server can select the refresh recommendation object based on the selection of the user. If the user has selected the recommendation object, then it will recommend a similar recommendation object as the refresh recommendation object based on the recommendation object selected by the user; if the user has not selected the recommendation object, then it can select the refresh recommendation object evenly according to the recommendation type selected by the user, such as based on the recommendation type selected by the user to be presented in the current presentation according to the heat level of the recommendation object in order to be presented as a refresh recommendation object. Through different refresh states, with different standards to select the refresh recommendation object, so that the selection of the refresh recommendation object is more suitable for the selection of the user, and improve the efficiency of the information recommendation.

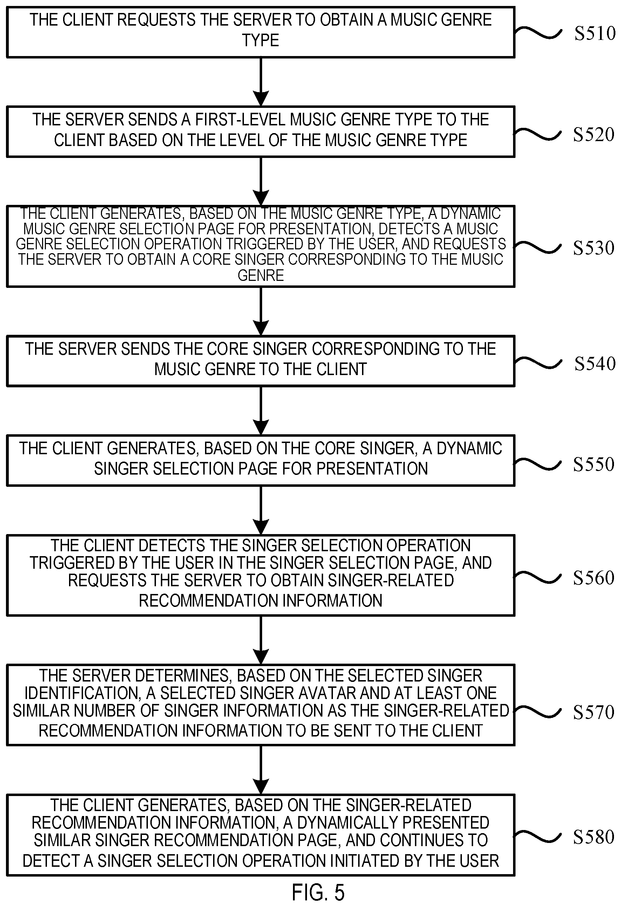

FIG. 5 is a schematic flowchart of a further method of information recommendation according to an embodiment of the present disclosure . The present embodiment provides an embodiment based on the above embodiment, taking a singer recommendation as an example. As shown in FIG. 5, the method includes the following.

The server predetermines the singers corresponding to each music genre (core singers and other singers), as well as the similarity between the singers. When singer recommendation is performed as following.

At S510, the client requests the server to obtain a music genre type.

At S520, the server sends a first-level music genre type to the client based on the level of the music genre type.

At S530, the client generates, based on the music genre type, a dynamic music genre selection page for presentation, detects a music genre selection operation triggered by the user, and requests the server to obtain a core singer corresponding to the music genre.

At S540, the server sends the core singer corresponding to the music genre to the client.

At S550, the client generates, based on the core singer, a dynamic singer selection page for presentation .

At S560, the client detects the singer selection operation triggered by the user in the singer selection page, and requests the server to obtain singer-related recommendation information .

At S570, the server determines, based on the selected singer identification, a selected singer avatar and at least one similar number of singer information as the singer-related recommendation information to be sent to the client.

At S580, the client generates, based on the singer-related recommendation information, a dynamically presented similar singer recommendation page, and continues to detect a singer selection operation initiated by the user.

Loop the execution of S560 to S580 until the user triggers the selection completion instruction to complete the preference selection operation of the singer by the use

On the basis of the above, after the client generates a dynamic music genre selection page according to the music genre type for present, the user can also trigger the music genre display control, and the client obtains the corresponding pattern of the music genre from the server and dynamically displays it on the music genre display control. Thus user may further click "Jump" in the genre selection page to select a singer without selecting a music genre.

When presenting the singer selection page, the user can click on the "exchange a batch" in the page to initiate a refresh request, and the client sends a refresh singer obtaining request to the server to obtain the refresh recommendation singers, and the server determines the refresh recommendation singers according to the refresh state and sends them to the client, so as to enable the client to perform the presentation.

The technical solution of this embodiment solves the problem of poor recommendation effect when obtaining new user preferences in a music playing program by recommending similar singers for the user to choose from based on the singers selected by the user, increasing the singer dimension information, adding more vertical user preference information input, and being able to more accurately and efficiently obtain the music preferences of a new user, and improving the recommendation effect.

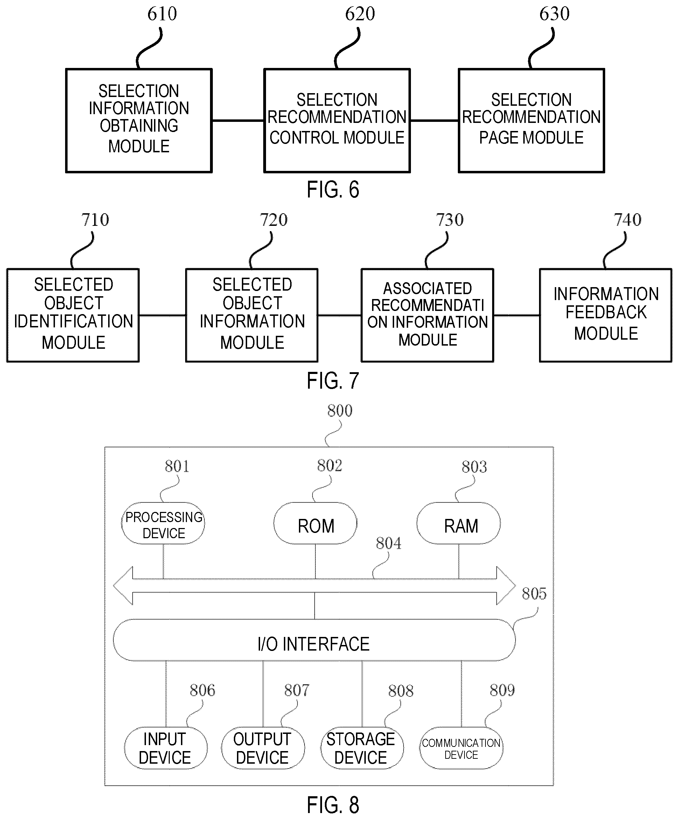

FIG. 6 is a structural block diagram of an apparatus for information recommendation according to an embodiment of the present disclosure, which may perform the method of information recommendation provided by any embodiment of the present disclosure and has corresponding function modules and effects of the execution method. As shown in FIG. 6, the apparatus includes a selection information obtaining module 610, a selection recommendation control module 620, and a selection recommendation page module 630.

The selection information obtaining module 610 is configured to determine, in response to a detected object selection operation, the selected object information corresponding to the selected object identification and an associated recommendation information of at least one associated recommendation object; the selection recommendation control module 620 is configured to generate a plurality of selection presenting controls based on the selected object information and the associated recommendation information, and determine a plurality of selection recommendation controls based on the plurality of selection presenting controls and a current display control in a current display page; and the selection recommendation page module 630 is configured to generate a selection recommendation page to be dynamically presented based on the plurality of selection recommendation controls, and present the selection recommendation page dynamically.

According to the technical solution of the embodiment of the present disclosure, the method includes: in response to a detected object selection operation, determining selected object information corresponding to a selected object identification and an associated recommendation information of at least one associated recommendation object; generating a plurality of selection presenting controls based on the selected object information and the associated recommendation information, determining a plurality of selection recommendation controls based on the plurality of selection presenting controls and a current display control in a current display page; and generating, based on the plurality of selection recommendation controls, a selection recommendation page to be dynamically presented, and presenting the selection recommendation page dynamically. When the user selects the recommended object, similar recommendation information can be generated for presentation based on the object selected by the user, which improves the efficiency of the presentation of the recommendation information, and at the same time, the dynamic presentation of similar recommendation information enhances the richness and interest of the picture content, and also enhances the interactive effect with the user.

Based on the above technical solution, the selection information obtaining module 610 is configured to:
in response to an object selection operation triggered by a user on a current display page.

Based on the above technical solution, the selection recommendation page module 630 includes at least one of the following.

A first adjusting unit configured to adjust, based on a positional relationship of the plurality of selection recommendation controls and according to a predetermined movement rule, a presentation position of a selection recommendation control in the selection recommendation page, so that the selection recommendation control with the adjusted presentation position is dynamically presented in the selection recommendation page; and a second adjusting unit configured to adjust, based on the positional relationship of the plurality of selection recommendation controls, the presentation position of the selection recommendation control in the selection recommendation page randomly, so that the selection recommendation control with the adjusted presentation position is dynamically presented in the selection recommendation page.

Based on the above technical solution, the selection presenting control comprises a selected object control corresponding to the selected object information and a plurality of associated recommendation controls corresponding to the associated recommendation information, and the selection recommendation control module 620 is configured to: use both the plurality of selection presenting controls and the current display control in the current display page as the selection recommendation control; and the positional relationship of the plurality of selection recommendation controls comprises: presenting the plurality of associated recommendation controls centered around the selected object control; or presenting the plurality of associated recommendation controls sequentially in adjacent rows of the selected object control

Based on the above technical solution, the selection recommendation page to be dynamically presented comprises a plurality of selection recommendation sub-pages, and the selection recommendation page module 630 is configured to:
generate, based on the plurality of selection recommendation controls, at least two frames of selection recommendation sub-page presented based on a temporal order; and present, based on a presenting order of the at least two frames of selection recommendation sub-page, the at least two frames of selection recommendation sub-page in sequence.

Based on the above technical solution, the apparatus further includes an object recommendation page module configured to:
In response to the detected object selection operation, obtaining a core recommendation object corresponding to a target recommendation type, generate a core object control corresponding to the core recommendation object, wherein the core object control presents a core object identification of the core recommendation object; generate a core object recommendation page based on a plurality of core object controls, and presenting the core object recommendation page on a display page. Correspondingly, the selection information obtaining module 610 is configured to: in response to a trigger operation by a user on the core object control in the core object recommendation page.

Based on the above technical solution, the object recommendation page module is configured to:
request from a server to obtain the core recommendation object corresponding to a default recommendation type; or, in response to a detected type selection operation, request from the server to obtain the core recommendation object corresponding to a selected type identification

Based on the above technical solution, the apparatus further includes a type recommendation page module configured to:
before the in response to a detected type selection operation, obtain a candidate recommendation type, generate a candidate recommendation control corresponding to the candidate recommendation type, wherein the candidate recommendation control presents a recommendation type identification of the candidate recommendation type; and generate a type recommendation page based on a plurality of candidate recommendation controls corresponding to a plurality of candidate recommendation types, and present the type recommendation page on a display page.

Based on the above technical solution, the apparatus further includes a type trigger module configured to:
in response to a detected type trigger operation, determine trigger type information corresponding to a trigger type identification; and generate a type trigger control based on the trigger type information, present the type trigger control dynamically in the type recommendation page.

Based on the above technical solution, the apparatus further includes a rotation display module configured to:
in response to a terminal rotation operation, rotate the current display page for display adapted to the terminal rotation operation, wherein a display control in the current display page adaptively changes dynamically.

Based on the above technical solution, the selection presenting control is circular.

Based on the above technical solution, the object is a performer, and the type being a music genre.

The apparatus for information recommendation provided in the embodiments of the present disclosure may execute the method of information recommendation provided in any of the embodiments of the present disclosure, having functional modules and effects corresponding to the execution of the method.

The plurality of units and modules included in the above apparatus are only divided in accordance with the functional logic, but are not limited to the above division, as long as they are capable of implementing the corresponding functions; furthermore, the names of the plurality of functional units are only for the purpose of facilitating mutual differentiation, and are not used to limit the scope of protection of the embodiments of the present disclosure'.

FIG. 7 is a structural block diagram of a further apparatus for information recommendation according to an embodiment of the present disclosure, which may perform the method of information recommendation provided by any embodiment of the present disclosure and has corresponding function modules and effects of the execution method. As shown in FIG. 7, the apparatus includes: a selected object identification module 710, a selected object information module 720, an associated recommendation information module 730, and an information feedback module 740.

The selected object identification module 710 is configured to determine a selected object identification corresponding to a recieved associated recommendation request in response to the received associated recommendation request; the selected object information module 720 is configured to determine selected object information based on the selected object identification; the associated recommendation information module 730 is configured to determine at least one associated recommendation object based on a similarity between a candidate recommendation object and the selected object identification, and obtain associated recommendation information of the associated recommendation object; and the information feedback module 740 is configured to send the selected object information and the associated recommendation information of the at least one associated recommendation object to a client.

According to the technical solution of the embodiment, it includes: in response to a received associated recommendation request, determining a selected object identification corresponding to the associated recommendation request; determining selected object information based on the selected object identification; determining at least one associated recommendation object based on a similarity between a candidate recommendation object and the selected object identification, obtaining associated recommendation information of the associated recommendation object; and sending the selected object information and the associated recommendation information of the at least one associated recommendation object to a client. Thus, pushing of associated objects that are similar to the selected object is implemented.

Based on the above technical solution, the apparatus further includes a recommendation object processing module configured to:
obtain a baseline recommendation object corresponding to each of a plurality of baseline recommendation types; and determine, for each baseline recommendation type, a core recommendation object corresponding to the baseline recommendation type based on a popularity of a plurality of baseline recommendation objects of the baseline recommendation type, and determine a similarity between the plurality of baseline recommendation objects based on evaluation information of the plurality of baseline recommendation objects in a plurality of evaluation dimensions.

Based on the above technical solution, the apparatus further includes a recommendation type sending module configured to:
in response to a received recommendation type obtaining request, determine a part of baseline recommendation types as a candidate recommendation type based on recommendation levels of the baseline recommendation type; and send the candidate recommendation type to the client.

Based on the above technical solution, the apparatus further includes a core object sending module configured to:
in response to a received recommendation object obtaining request, determine a selected type identification corresponding to the recommendation object obtaining request; and send a core recommendation object of a baseline recommendation type corresponding to the selected type identification to a client.

The apparatus for information recommendation provided in the embodiments of the present disclosure may execute the method of information recommendation provided in any of the embodiments of the present disclosure, having functional modules and effects corresponding to the execution of the method.

The plurality of units and modules included in the above apparatus are only divided in accordance with the functional logic, but are not limited to the above division, as long as they are capable of implementing the corresponding functions; furthermore, the names of the plurality of functional units are only for the purpose of facilitating mutual differentiation, and are not used to limit the scope of protection of the embodiments of the present disclosure.

FIG. 8 is a schematic structural diagram of an electronic device according to an embodiment of the present disclosure. Reference is made below to FIG. 8, which illustrates a schematic diagram of a structure of an electronic device (e.g., a terminal device or a server in FIG. 8) 800 suitable for use in implementing embodiments of the present disclosure. The terminal device in the embodiments of the present disclosure may include a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital television (TV), a desktop computer, or the like. The electronic device shown in FIG. 8 is merely an example and should not impose any limitation on the functions and scope of use of the embodiments of the present disclosure.

As shown in FIG. 8, the electronic device 800 may include a processing device (for example, a central processing unit, a graphics processor, etc. ) 801, and the processing device 801 may perform various appropriate actions and processing according to a program stored in a read-only memory (ROM) 802 or a program loaded into a random access memory (RAM) 803 from a storage device 808. In the RAM 803, various programs and data required by the operation of the electronic device 800 are also stored. The processing device 801, the ROM 802, and the RAM 803 are connected to each other through a bus 804. An input / output (I / O) interface 805 is also connected to the bus 804.

The following devices may be connected to the I / O interface 805: an input device 806 including, for example, a touch screen, a touch pad, a keyboard, a mouse, a camera, a microphone, an accelerometer, a gyroscope, etc. ; an output device 807 including, for example, a liquid crystal display (LCD), a speaker, a vibrator, etc. ; a storage device 808 including, for example, a magnetic tape, a hard disk, etc. ; and a communication device 809. The communication device 809 may allow the electronic device 800 to communicate wirelessly or wired with other devices to exchange data. Although FIG. 8 illustrates an electronic device 800 having a variety of devices, it is not required to implement or have all illustrated devices. More or fewer devices may alternatively be implemented or provided.

According to an embodiment of the present disclosure, the process described above with reference to the flowchart may be implemented as a computer software program. For example, embodiments of the present disclosure include a computer program product comprising a computer program embodied on a non-transitory computer readable medium, the computer program comprising program code for performing the method shown in the flowchart. In such embodiments, the computer program may be downloaded and installed from the network through the communication device 809, or installed from the storage device 808, or from the ROM 802. When the computer program is executed by the processing apparatus 801, the foregoing functions defined in the method of the embodiments of the present disclosure are performed.

The names of the messages or information interacted between the plurality of apparatuses of the present disclosure embodiments are used for illustrative purposes only, and are not intended to place limitations on the scope of those messages or information.

The electronic device provided by the embodiments of the present disclosure belongs to the same disclosure concept as the information recommendation method provided by the above embodiments, and technical details not exhaustively described in the present embodiments can be found in the above embodiments, and the present embodiments have the same effect as the above embodiments.

Embodiments of the present disclosure provide a computer storage medium having a computer program stored thereon which, when executed by a processor, implements a method of information recommendation as provided in the above embodiments.

The computer readable medium described above may be a computer readable signal medium or a computer readable storage medium or any combination of the two. The computer-readable storage medium may be, for example, an electrical, magnetic, optical, electromagnetic, infrared, or semiconductor system, device, or device, or any combination thereof. The computer-readable storage medium may include: an electrical connection having one or more wires, a portable computer diskette, a hard disk, a RAM, a ROM, an erasable programmable read-only memory (EPROM), a flash memory, an optical fiber, a portable compact disk read-only memory (CD-ROM), an optical storage device, a magnetic storage device, or any suitable combination thereof. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms, including electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted by any suitable medium, including wires, optical cables, Radio Frequency (RF), and the like, or any suitable combination thereof.

**In** some implementations, the client, server may communicate using any currently known or future developed network protocol, such as Hypertext Transfer Protocol (HTTP), and may be interconnected with any form or medium of digital data communication (e.g., a communication network). Examples of communication networks include Local Area Networks (LANs), Wide Area Networks (WANs), Internet networks (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

The computer readable medium carries one or more programs, and when the one or more programs are executed by the electronic device, the electronic device is caused to: in response to a detected object selection operation, determine selected object information corresponding to a selected object identification and an associated recommendation information of at least one associated recommendation object; generate a plurality of selection presenting controls based on the selected object information and the associated recommendation information, determine a plurality of selection recommendation controls based on the plurality of selection presenting controls and a current display control in a current display page; and generate, based on the plurality of selection recommendation controls, a selection recommendation page to be dynamically presented, and present the selection recommendation page dynamically.

Alternatively, the computer-readable medium carries carries one or more programmes that, when the one or more programmes are executed by the electronic device, cause the electronic device to: in response to a received associated recommendation request, determine a selected object identification corresponding to the associated recommendation request; determine selected object information based on the selected object identification; determine at least one associated recommendation object based on a similarity between a candidate recommendation object and the selected object identification, obtain associated recommendation information of the associated recommendation object; and send the selected object information and the associated recommendation information of the at least one associated recommendation object to a client.

Computer program code for performing the operations of the present disclosure may be written in one or more programming languages, including object oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a LAN or WAN, or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should further be noted that, in some alternative implementations, the functions noted in the blocks may also occur in a different order than noted in the figures. For example, two consecutively represented blocks may actually be performed substantially in parallel, which may sometimes be performed in the reverse order, depending on the functionality involved. It should further be noted that, each block in the block diagrams and/or flowcharts, as well as combinations of blocks in the block diagrams and/or flowcharts, may be implemented with a dedicated hardware-based system that performs specified functions or operations, or may be implemented in a combination of dedicated hardware and computer instructions.

The units involved in the embodiments of the present disclosure may be implemented in software or may be implemented in hardware. The name of the unit does not constitute a limitation on the unit itself in one case.

The functions described above may be performed, at least in part, by one or more hardware logic components. For example, non-restrictively, the example types of hardware logic components that may be used include: a field programmable gate array (FPGA), an application specific integrated circuit (ASIC), an application specific standard (ASSP), a system on chip (SOC), a complex programming logic device (CPLD), and the like.

**In** the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include electronic, magnetic, optical, electromagnetic, infrared, or semiconductor systems, devices, or devices, or any suitable combination of the foregoing. Examples of machine-readable storage media would include an electrical connection based on one or more wires, a portable computer disk, a hard disk, a RAM, a ROM, an EPROM or flash memory, an optical fiber, a CD-ROM, an optical storage device, a magnetic storage device, or any suitable combination of the foregoing.

According to one or more embodiments of the present disclosure, Example 1 provides a method of information recommendation. The method comprises:
in response to a detected object selection operation, determining selected object information corresponding to a selected object identification and an associated recommendation information of at least one associated recommendation object;
generating a plurality of selection presenting controls based on the selected object information and the associated recommendation information, determining a plurality of selection recommendation controls based on the plurality of selection presenting controls and a current display control in a current display page; and
generating, based on the plurality of selection recommendation controls, a selection recommendation page to be dynamically presented, and presenting the selection recommendation page dynamically.

According to one or more embodiments of the present disclosure, Example 2 provides a method of information recommendation, further comprising:
the in response to a detected object selection operation comprises:
in response to an object selection operation triggered by a user on a current display page.

According to one or more embodiments of the present disclosure, Example 3 provides a method of information recommendation, further comprising:
generating a selection recommendation page to be dynamically presented based on the plurality of selection recommendation controls comprises at least one of the following:
adjusting, based on a positional relationship of the plurality of selection recommendation controls and according to a predetermined movement rule, a presentation position of a selection recommendation control in the selection recommendation page, so that the selection recommendation control with the adjusted presentation position is dynamically presented in the selection recommendation page; or
adjusting, based on the positional relationship of the plurality of selection recommendation controls, the presentation position of the selection recommendation control in the selection recommendation page randomly, so that the selection recommendation control with the adjusted presentation position is dynamically presented in the selection recommendation page.

According to one or more embodiments of the present disclosure, Example 4 provides a method of information recommendation, further comprising:
the selection presenting control comprises a selected object control corresponding to the selected object information and a plurality of associated recommendation controls corresponding to the associated recommendation information, and the determining a plurality of selection recommendation controls based on the plurality of selection presenting controls and a current display control in a current display page comprises:
using both the plurality of selection presenting controls and the current display control in the current display page as the selection recommendation control; and
the positional relationship of the plurality of selection recommendation controls comprises:
   presenting the plurality of associated recommendation controls centered around the selected object control; or
   presenting the plurality of associated recommendation controls sequentially in adjacent rows of the selected object control.

According to one or more embodiments of the present disclosure, Example 5 provides a method of information recommendation, further comprising:
the selection recommendation page to be dynamically presented comprises a plurality of selection recommendation sub-pages, and the generating a selection recommendation page to be dynamiceally presented based on the plurality of selection recommendation controls, and presenting the selection recommendation page dynamically comprises:
generating, based on the plurality of selection recommendation controls, at least two frames of selection recommendation sub-page presented based on a temporal order; and
presenting, based on a presenting order of the at least two frames of selection recommendation sub-page, the at least two frames of selection recommendation sub-page in sequence.

According to one or more embodiments of the present disclosure, Example 6 provides a method of information recommendation, further comprising:
the generating, based on the plurality of selection recommendation controls, at least two frames of selection recommendation sub-page presented based on a temporal order comprises:
determining, based on a presenting order of the at least two frames of selection recommendation sub-page, the position information of the plurality of selection recommendation controls in each frame of selection recommendation sub-page;
for each frame of the selection recommendation sub-page, set positions of the plurality of selection recommendation controls based on the position information of the plurality of selection recommendation controls in the selection recommendation sub-page, and obtain the selection recommendation sub-page.

According to one or more embodiments of the present disclosure, Example 7 provides a method of information recommendation, further comprising:
determining selected object information corresponding to a selected object identification and an associated recommendation information of at least one associated recommendation object comprising:
requesting from the server, based on the selected object identification, to obtain selected object information corresponding to the selected object identification and associated recommendation information of at least one associated recommendation object.

According to one or more embodiments of the present disclosure, Example 8 provides a method of information recommendation, further comprising:
: in response to a detected object refresh operation, determining refresh recommendation information for at least one refresh recommendation object;
generating a plurality of refresh display control based on the refresh recommendation information, generating a refresh display page for dynamic presenting based on the plurality of refresh display control, and dynamically presenting the refresh display page.

According to one or more embodiments of the present disclosure, Example 9 provides a method of information recommendation, further comprising:
generating a refresh display page for dynamic presenting based on a refresh display control, comprising:
determining a presentation position relationship of the plurality of refresh recommendation objects based on a heat indicator of the plurality of refresh recommendation objects; and
adjusting, based on the presentation position relationship, a presentation position of a plurality of refresh display controls corresponding to the plurality of refresh recommendation objects so that the plurality of refresh display controls are dynamically presented in the refresh display page.

According to one or more embodiments of the present disclosure, Example 10 provides a method of information recommendation, further comprising:
before the in response to a detected object selection operation, further comprising:
obtaining a core recommendation object corresponding to a target recommendation type, generating a core object control corresponding to the core recommendation object, wherein the core object control presents a core object identification of the core recommendation object;
generating a core object recommendation page based on a plurality of core object controls, and presenting the core object recommendation page on a display page; and
the in response to a detected object selection operation comprises:
   in response to a trigger operation by a user on the core object control in the core object recommendation page.

According to one or more embodiments of the present disclosure, Example 11 provides a method of information recommendation, further comprising:
the core object identification includes a core object name, determining the selected object information corresponding to the selected object identification comprising:
requesting to the server to get the core object avatar corresponding to the core object name as selected object information.

According to one or more embodiments of the present disclosure, Example 12 provides a method of information recommendation, further comprising:
the obtaining a core recommendation object corresponding to a target recommendation type comprises:
requesting from a server to obtain the core recommendation object corresponding to a default recommendation type; or
in response to a detected type selection operation, requesting from the server to obtain the core recommendation object corresponding to a selected type identification.

According to one or more embodiments of the present disclosure, Example 13 provides a method of information recommendation, further comprising:
before the in response to a detected type selection operation, further comprising:
obtaining a candidate recommendation type, generating a candidate recommendation control corresponding to the candidate recommendation type, wherein the candidate recommendation control presents a recommendation type identification of the candidate recommendation type; and
generating a type recommendation page based on a plurality of candidate recommendation controls corresponding to a plurality of candidate recommendation types, and presenting the type recommendation page on a display page.

According to one or more embodiments of the present disclosure, Example 14 provides a method of information recommendation, further comprising:
in response to a detected type trigger operation, determining trigger type information corresponding to a trigger type identification; and
generating a type trigger control based on the trigger type information, presenting the type trigger control dynamically in the type recommendation page.

According to one or more embodiments of the present disclosure, Example 15 provides a method of information recommendation, further comprising:
the trigger type identification is a trigger type name, and determining the trigger type information corresponding to the trigger type identification comprising:
requesting from the server to obtain the trigger type pattern corresponding to the trigger type name as the trigger type information.

According to one or more embodiments of the present disclosure, Example 16 provides a method of information recommendation, further comprising:
in response to a terminal rotation operation, rotating the current display page for display adapted to the terminal rotation operation, wherein a display control in the current display page adaptively changes dynamically.

According to one or more embodiments of the present disclosure, Example 17 provides a method of information recommendation, further comprising:
the selection presenting control is circular.

According to one or more embodiments of the present disclosure, Example 18 provides a method of information recommendation, further comprising:
the object is a performer, and the type being a music genre.

According to one or more embodiments of the present disclosure, Example 19 provides a method of information recommendation, comprising:
in response to a received associated recommendation request, determining a selected object identification corresponding to the associated recommendation request;
determining selected object information based on the selected object identification;
determining at least one associated recommendation object based on a similarity between a candidate recommendation object and the selected object identification, obtaining associated recommendation information of the associated recommendation object; and
sending the selected object information and the associated recommendation information of the at least one associated recommendation object to a client.

According to one or more embodiments of the present disclosure, Example 20 provides a method of information recommendation, further comprising:
obtaining a baseline recommendation object corresponding to each of a plurality of baseline recommendation types; and
determining, for each baseline recommendation type, a core recommendation object corresponding to the baseline recommendation type based on a popularity of a plurality of baseline recommendation objects of the baseline recommendation type, and determining a similarity between the plurality of baseline recommendation objects based on evaluation information of the plurality of baseline recommendation objects in a plurality of evaluation dimensions.

According to one or more embodiments of the present disclosure, Example 21 provides a method of information recommendation, further comprising:
in response to a received recommendation type obtaining request, determining a part of baseline recommendation types as a candidate recommendation type based on recommendation levels of the baseline recommendation type; and
sending the candidate recommendation type to the client.

According to one or more embodiments of the present disclosure, Example 22 provides a method of information recommendation, further comprising:
in response to a received recommendation object obtaining request, determining a selected type identification corresponding to the recommendation object obtaining request; and
sending a core recommendation object of a baseline recommendation type corresponding to the selected type identification to a client.

According to one or more embodiments of the present disclosure, Example 23 provides a method of information recommendation, further comprising:
in response to the received object refresh request, determining a refresh type identification corresponding to the object refresh request;
selecting, based on the heat level of the type recommendation object corresponding to the refresh type identification and/or the selected object identification, a refresh recommendation object from among the unrecommended objects corresponding to the refresh type identification; and
sending the refresh recommendation object to the client.

Further, while multiple operations are depicted in a particular order, this should not be understood to require that these operations be performed in the particular order shown or in sequential order. In certain circumstances, multitasking and parallel processing may be advantageous. Likewise, while multiple implementation details are included in the discussion above, these should not be construed as limiting the scope of the present disclosure. Some features described in the context of separate embodiments may also be implemented in combination in a single embodiment. Conversely, the various features described in the context of a single embodiment may also be implemented in multiple embodiments either individually or in any suitable sub-combination.

## Claims

1. A method of information recommendation, comprising:
in response to a detected object selection operation, determining selected object information corresponding to a selected object identification and an associated recommendation information of at least one associated recommendation object;
generating a plurality of selection presenting controls based on the selected object information and the associated recommendation information, determining a plurality of selection recommendation controls based on the plurality of selection presenting controls and a current display control in a current display page; and
generating, based on the plurality of selection recommendation controls, a selection recommendation page to be dynamically presented, and presenting the selection recommendation page dynamically.

2. The method of claim 1, wherein the in response to a detected object selection operation comprises:
in response to an object selection operation triggered by a user on a current display page.

3. The method of claim 1, wherein the generating a selection recommendation page to be dynamically presented based on the plurality of selection recommendation controls comprises at least one of the following:
adjusting, based on a positional relationship of the plurality of selection recommendation controls and according to a predetermined movement rule, a presentation position of a selection recommendation control in the selection recommendation page, so that the selection recommendation control with the adjusted presentation position is dynamically presented in the selection recommendation page; or
adjusting, based on the positional relationship of the plurality of selection recommendation controls, the presentation position of the selection recommendation control in the selection recommendation page randomly, so that the selection recommendation control with the adjusted presentation position is dynamically presented in the selection recommendation page.

4. The method of claim 3, wherein the selection presenting control comprises a selected object control corresponding to the selected object information and a plurality of associated recommendation controls corresponding to the associated recommendation information, and the determining a plurality of selection recommendation controls based on the plurality of selection presenting controls and a current display control in a current display page comprises:
using both the plurality of selection presenting controls and the current display control in the current display page as the selection recommendation control; and
the positional relationship of the plurality of selection recommendation controls comprises:
presenting the plurality of associated recommendation controls centered around the selected object control; or
presenting the plurality of associated recommendation controls sequentially in adjacent rows of the selected object control.

5. The method of claim 1, wherein the selection recommendation page to be dynamically presented comprises a plurality of selection recommendation sub-pages, and the generating a selection recommendation page to be dynamiceally presented based on the plurality of selection recommendation controls, and presenting the selection recommendation page dynamically comprises:
generating, based on the plurality of selection recommendation controls, at least two frames of selection recommendation sub-page presented based on a temporal order; and
presenting, based on a presenting order of the at least two frames of selection recommendation sub-page, the at least two frames of selection recommendation sub-page in sequence.

6. The method of claim 1, before the in response to a detected object selection operation, further comprising:
obtaining a core recommendation object corresponding to a target recommendation type, generating a core object control corresponding to the core recommendation object, wherein the core object control presents a core object identification of the core recommendation object;
generating a core object recommendation page based on a plurality of core object controls, and presenting the core object recommendation page on a display page; and
the in response to a detected object selection operation comprises:
in response to a trigger operation by a user on the core object control in the core object recommendation page.

7. The method of claim 6, wherein the obtaining a core recommendation object corresponding to a target recommendation type comprises:
requesting from a server to obtain the core recommendation object corresponding to a default recommendation type; or
in response to a detected type selection operation, requesting from the server to obtain the core recommendation object corresponding to a selected type identification.

8. The method of claim 7, before the in response to a detected type selection operation, further comprising:
obtaining a candidate recommendation type, generating a candidate recommendation control corresponding to the candidate recommendation type, wherein the candidate recommendation control presents a recommendation type identification of the candidate recommendation type; and
generating a type recommendation page based on a plurality of candidate recommendation controls corresponding to a plurality of candidate recommendation types, and presenting the type recommendation page on a display page.

9. The method of claim 8, further comprising:
in response to a detected type trigger operation, determining trigger type information corresponding to a trigger type identification; and
generating a type trigger control based on the trigger type information, presenting the type trigger control dynamically in the type recommendation page.

10. The method of claim 1, further comprising:
in response to a terminal rotation operation, rotating the current display page for display adapted to the terminal rotation operation, wherein a display control in the current display page adaptively changes dynamically.

11. The method of any of claims 1 to 10, wherein the selection presenting control is circular.

12. The method of any of claims 1 to 10, wherein the object is a performer, and the type being a music genre.

13. A method of information recommendation, comprising:
in response to a received associated recommendation request, determining a selected object identification corresponding to the associated recommendation request;
determining selected object information based on the selected object identification;
determining at least one associated recommendation object based on a similarity between a candidate recommendation object and the selected object identification, obtaining associated recommendation information of the associated recommendation object; and
sending the selected object information and the associated recommendation information of the at least one associated recommendation object to a client.

14. The method of claim 13, further comprising:
obtaining a baseline recommendation object corresponding to each of a plurality of baseline recommendation types; and
determining, for each baseline recommendation type, a core recommendation object corresponding to the baseline recommendation type based on a popularity of a plurality of baseline recommendation objects of the baseline recommendation type, and determining a similarity between the plurality of baseline recommendation objects based on evaluation information of the plurality of baseline recommendation objects in a plurality of evaluation dimensions.

15. The method of claim 13, further comprising:
in response to a received recommendation type obtaining request, determining a part of baseline recommendation types as a candidate recommendation type based on recommendation levels of the baseline recommendation type; and
sending the candidate recommendation type to the client.

16. The method of claim 13, further comprising:
in response to a received recommendation object obtaining request, determining a selected type identification corresponding to the recommendation object obtaining request; and
sending a core recommendation object of a baseline recommendation type corresponding to the selected type identification to a client.

17. An apparatus for information recommendation, comprising:
a selection information obtaining module configured to determine, in response to a detected object selection operation, the selected object information corresponding to the selected object identification and an associated recommendation information of at least one associated recommendation object;
a selection recommendation control module configured to generate a plurality of selection presenting controls based on the selected object information and the associated recommendation information, and determine a plurality of selection recommendation controls based on the plurality of selection presenting controls and a current display control in a current display page; and
a selection recommendation page module configured to generate a selection recommendation page to be dynamically presented based on the plurality of selection recommendation controls, and present the selection recommendation page dynamically.

18. An apparatus for information recommendation, comprising:
a selected object identification module configured to determine a selected object identification corresponding to a recieved associated recommendation request in response to the received associated recommendation request;
a selected object information module configured to determine selected object information based on the selected object identification;
an associated recommendation information module configured to determine at least one associated recommendation object based on a similarity between a candidate recommendation object and the selected object identification, and obtain associated recommendation information of the associated recommendation object; and
an information feedback module configured to send the selected object information and the associated recommendation information of the at least one associated recommendation object to a client.

19. An electronic device, comprising:
at least one processor;
a storage device configured to store at least one program; and
when the at least one program is executed by the at least one processor, the at least one processor is caused to implement at least one of the following: a method of information recommendation of any of claims 1 to 12; a method of information recommendation of any of claims 13 to 16.

20. A storage medium comprising computer-executable instructions, the computer-executable instructions, when executed by a computer processor, being for performing at least one of the following: a method of information recommendation of any of claims 1 to 12; a method of information recommendation of any of claims 13 to 16.

21. A computer program product comprising a computer program carried on a non-transitory computer readable medium, the computer program comprising a program code for performing at least one of the following: a method of information recommendation of any of claims 1 to 12; a method of information recommendation of any of claims 13 to 16.
